# EUROPEAN PATENT APPLICATION

(11) **EP 1 762 975 A2**
(43) Date of publication of application: **14.03.2007**
(21) Application number: 06076648.2
(22) Date of filing: 31.08.2006
(51) Int. Cl.: G06T 5/40

(54) **Histogram equalization method for a vision-based occupant sensing system**

(30) Priority: 09.09.2005 US 223620
(71) Applicant: Delphi Technologies, Inc., Troy, Michigan 48007 (US)
(72) Inventor: Meier, Michaël R., Walled Lake, MI 48390 (US); Fultz, William W., Carmel, IN 46033 (US)
(74) Representative: Denton, Michael John

(57) **Abstract**

A histogram equalization technique facilitates edge detection of objects (10) imaged by a vision-based occupant sensing system (VS) by segmenting the brightness continuum of an imaging chip (20b) into predefined regions, and adjusting pixel intensities corresponding to identified histogram clusters within a given brightness region to redistribute the clusters within that region (42-48). This enhances brightness differentiation for objects (10) in every region of the brightness continuum (i.e., both low and high reflectivity objects), enabling reliable edge detection of all objects of interest with a single image.

## Description

### TECHNICAL FIELD

The present invention is directed to image processing in a vision-based vehicle occupant sensing system, and more particularly to a histogram equalization technique that facilitates edge detection of imaged objects.

### BACKGROUND OF THE INVENTION

Occupant sensing systems are commonly used in motor vehicles for determining if pyrotechnically deployed restraints such as air bags should be deployed in the event of sufficiently severe crash. Early systems relied exclusively on sensors for measuring physical parameters such as seat force, but vision-based systems have become economically attractive due to the advent of low-cost solid-state imaging chips.

Most vision-based occupant sensing systems utilize algorithms for identifying the edges of various objects in the image, and such algorithms require at least a minimum amount of contrast between a given object and its surroundings. This can pose a problem in the vehicle environment because the images frequently include objects with varying reflectance characteristics resulting in variation within the boundaries of an object and minimal separation at the boundaries in some instances. In fact, experience has shown that objects typically present in a vehicle passenger compartment tend to exhibit either relative low reflectivity or relatively high reflectivity; that is, very few of the objects contribute to the middle of the brightness continuum. Direct sunlighting of the objects adds to the separation in brightness by creating both intense illumination and harsh shadows.

One technique that is commonly used for redistributing image intensity is histogram equalization. Histogram equalization can be performed to redistribute the imager output over the brightness continuum, but this can actually hamper edge detection by raising the brightness of background clutter (noise) and saturating high reflectivity objects. One way of getting around this difficulty is to overlay multiple diversely equalized or separately acquired images, but these techniques unduly increase processing time and memory requirements. Accordingly, what is needed is an image processing method that facilitates reliable edge detection of both high and low reflectivity objects in a single image without significantly impacting system processing time and memory requirements.

### SUMMARY OF THE INVENTION

The present invention is directed to an improved histogram equalization technique that facilitates edge detection of objects imaged by a vision-based occupant sensing system, where the brightness continuum of an imaging chip is segmented into predefined regions prior to histogram equalization. Pixel intensities corresponding to identified histogram clusters within a given brightness region are adjusted to redistribute the clusters within that region. The result is enhanced brightness differentiation for objects in every region of the brightness continuum (i.e., both low and high reflectivity objects), enabling reliable edge detection of all objects of interest with a single image.

### BRIEF DESCRIPTION OF THE DRAWINGS

FIG. 1 is a diagram of a vehicle passenger compartment and vision-based occupant sensing system, including a solid-state imaging device and a microprocessor-based digital signal processor (DSP).
FIGS. 2A and 2B respectively depict an image captured by the vision-based occupant sensing system of FIG. 1 and a histogram of such image.
FIGS. 3A and 3B respectively depict the image of FIG. 2A as modified by a traditional histogram equalization technique and a histogram of the modified image;
FIGS. 4A and 4B respectively depict the image of FIG. 2A as modified by the segmented histogram equalization method of this invention and a histogram of the modified; and
FIG. 5 is a flow diagram executed by the DSP of FIG. 1 for carrying out the method of this invention.

### DESCRIPTION OF THE PREFERRED EMBODIMENTS

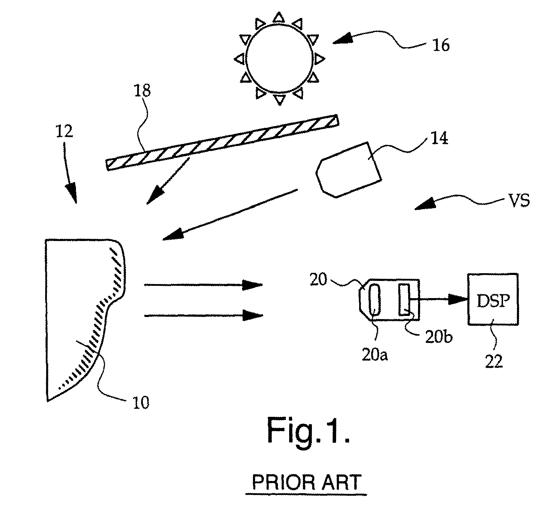

Referring to FIG. 1, the reference numeral 10 generally designates an object 10 of interest in a vehicle passenger compartment 12. The object 10 is illuminated by both an active light source 14 and an ambient light source, as designated by the sun 16. The active light source 14 may be one or more light-emitting-diodes that emit light in a visible or near-infrared wavelength band from a location such as in the compartment headliner or the interior rear-view mirror. The ambient light source may be solar as indicated, or may emanate from other sources such as roadside lights, and typically enters the compartment 12 through a window 18.

A vision system VS includes the active light source 14, a digital camera (DC) 20 and a microprocessor-based digital signal processor (DSP) 22. Active and ambient light reflected from object 10 is detected and imaged by digital camera 20, which typically includes an imaging lens 20a and solid-state imager chip 20b. The imager chip 20b is a multi-pixel array that is responsive to the impinging light content, and creates a corresponding digital image. The DSP 22 typically functions to locate objects of interest in the image, such as occupants or infant car seats. For example, DSP 22 can be programmed to recognize the presence of a seat occupant, to classify the occupant, and possibly to determine the position of a recognized occupant relative to an air bag deployment zone.

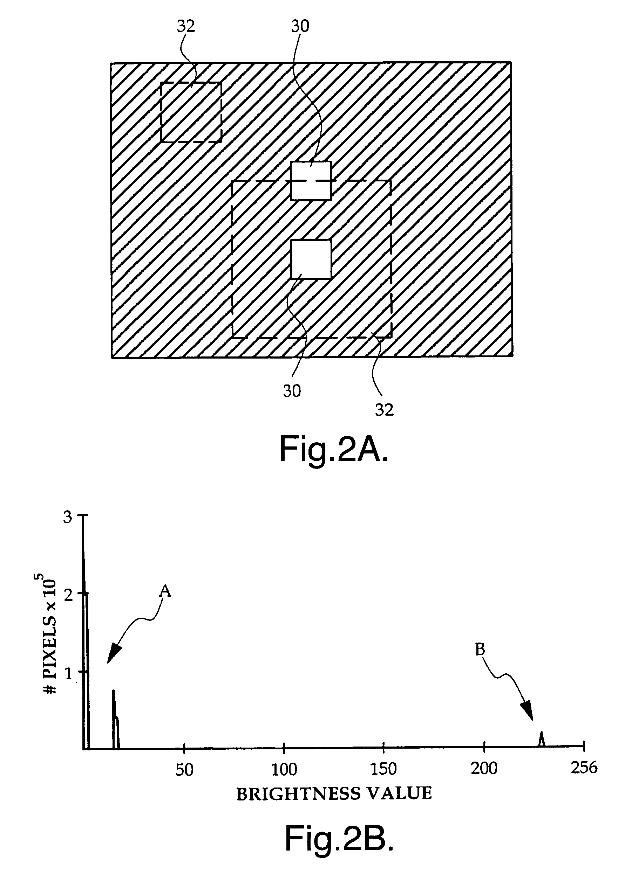

Achieving the above-mentioned object identification functions requires reliable edge detection of various objects of interest in each image. As explained above, however, there is frequently insufficient contrast between an imaged object and its surroundings to enable reliable edge detection. A histogram is commonly used to map the distribution of the various possible brightness levels within an image, and a histogram of an image from a vision-based occupant sensing system will often reveal concentrations of pixel intensity at the low and high ends of the brightness continuum, with minimal content in the mid-range of the brightness continuum. FIGS. 2A-2B depict an example of this effect. FIG. 2A depicts an image of a pair of relatively large high reflectivity objects 30 and a pair of relatively small low reflectivity objects 32. The low reflectivity objects 32 are visually indistinguishable from the background, and therefore identified in phantom. A histogram of the image of FIG. 2A is depicted in FIG. 2B, for the case of an imager where each pixel has 2⁸ (i.e., 256) possible brightness levels. The histogram reveals a pair of pixel concentrations (designated by the letter A) at the low end of the brightness continuum corresponding to the low reflectivity objects 32 and one smaller pixel concentration (designated by the letter B) at the high end of the brightness continuum corresponding to the high reflectivity objects 30. The DSP 22 will ordinarily have no difficulty resolving the edges of high reflectivity objects 30 due to the high level of contrast evident in the image of FIG. 2A, but there is insufficient contrast between the low reflectivity objects 32 and their surroundings for reliable edge detection.

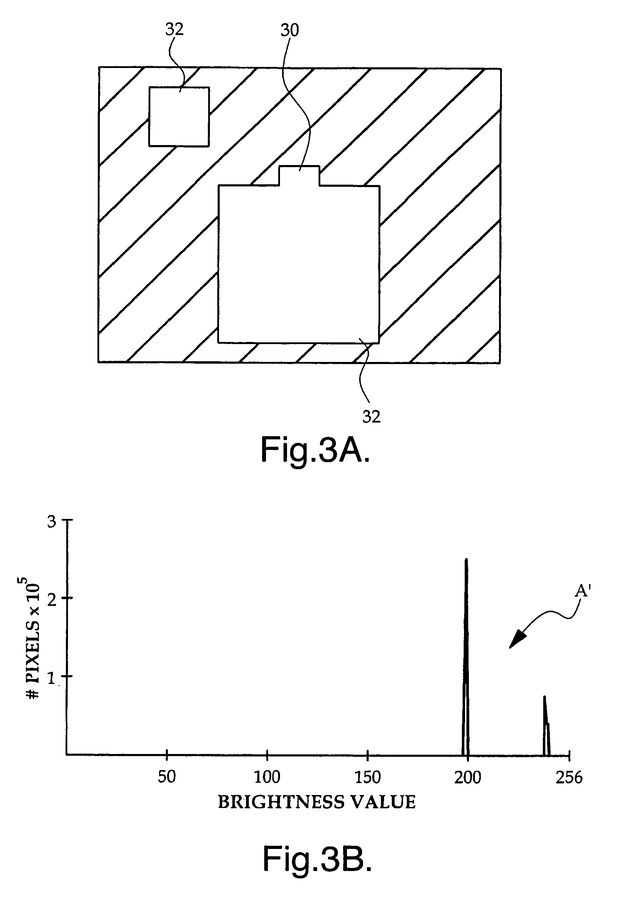

FIGS. 3A-3B depict the result of a traditional histogram equalization technique as applied the image of FIG. 2A. In FIG. 3B, the pixel concentration A' corresponds to the pixel concentration A of FIG. 2B. Histogram equalization is typically used to increase contrast in an image by redistributing the intensity readings over the brightness continuum, but with an image such as depicted in FIG. 2A, traditional histogram equalization causes two problems. First, it increases the brightness of background clutter (noise) so that the edges of even the low reflectivity objects 32 may be indistinguishable from the background for purposes of edge detection; and second, it completely saturates the high reflectivity objects 30. This is particularly evident in the histogram of FIG. 3B, where the pixel concentration corresponding to the high reflectivity objects 30 is no longer within the dynamic range of the imager 20b.

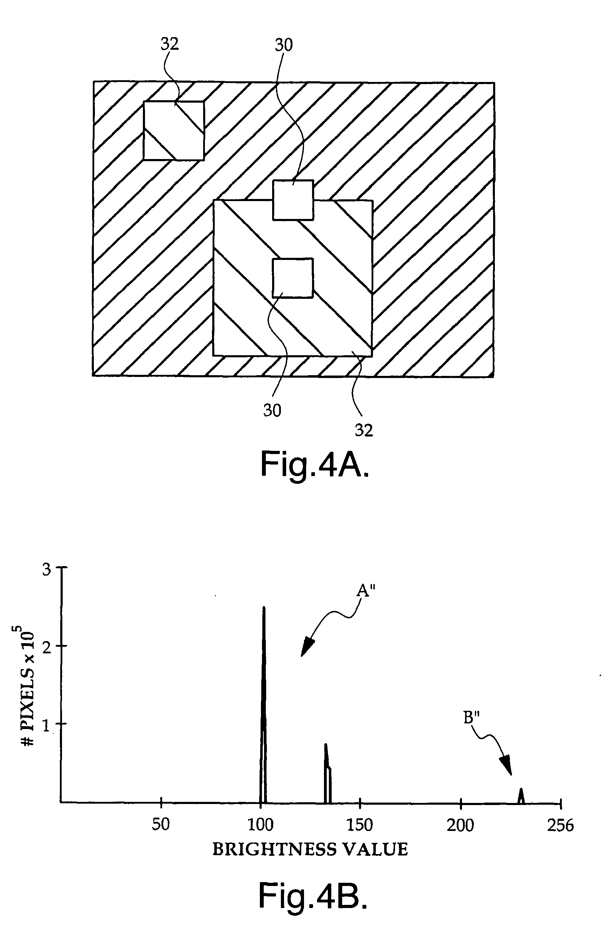

The method of the present invention overcomes this problem by segmenting where the brightness continuum into predefined regions prior to histogram equalization, and then adjusting the brightness of the pixel concentrations on a regional basis to redistribute the concentrations within each region. For example, the histogram of FIG. 2B can be segmented into two regions - a first region below a brightness threshold THR and a second region above the threshold THR. The pixel concentrations (A) corresponding to the low reflectivity objects 32 fall within the first region, and a histogram equalization of the first region redistributes the concentrations (A) within the first region. Importantly, the histogram equalization of the first region: (1) has no affect on the brightness of pixel concentrations within the second region, (2) preserves contrast between objects in different regions of the brightness continuum; and (3) limits the amount by which the brightness of background clutter is raised. Similarly, the pixel concentrations (B) corresponding to the high reflectivity objects 30 fall within the second region, and a histogram equalization of the second region redistributes the concentrations (B) within the second region. The resulting improvement is evident in the enhanced image of FIG. 4A, where there is obvious contrast between the low reflectivity objects 32 and their surroundings (including background clutter), and sufficient contrast between the high reflectivity objects 30 and other objects or backgrounds is preserved. In the corresponding histogram of FIG. 4B, the pixel concentrations A" corresponds to the pixel concentrations A of FIG. 2A, and the pixel concentration B" corresponds to the pixel concentration B of FIG. 2A. The histogram reveals that the pixel concentrations A have been redistributed within just the first region, and the concentrations B have been redistributed within just the second region. This provides enhanced contrast for objects in every region of the brightness continuum (i.e., both low and high reflectivity objects), enabling reliable edge detection by DSP 22 of all objects of interest with a single image. Of course, the brightness continuum may be divided into three or more regions, as desired.

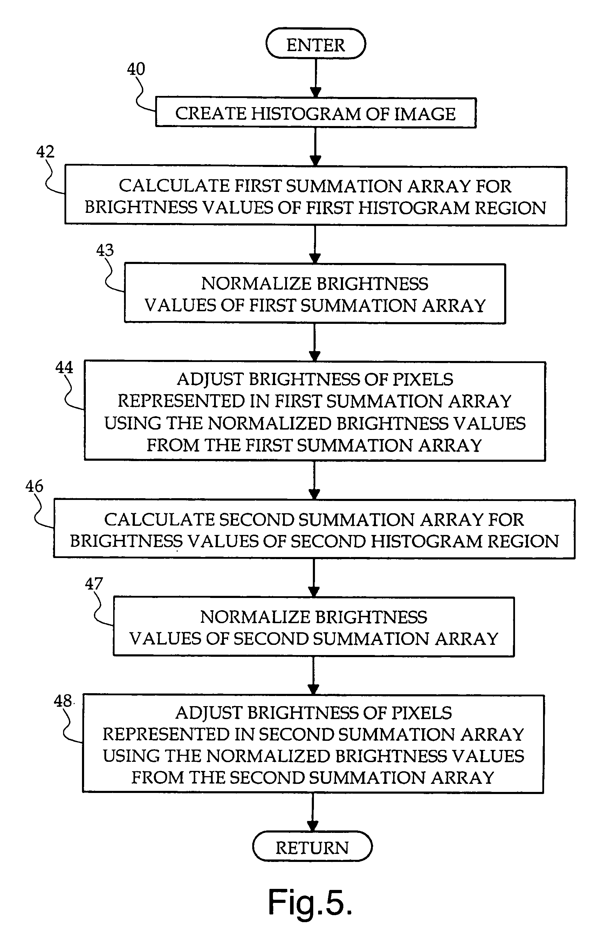

The flow diagram of FIG. 5 represents a software routine for carrying out the method of this invention with two brightness regions. The routine is executed by DSP 22 for each image produced by imager 20b, and involves basically three steps. The first step is to create a histogram of the image, as indicated at block 40. The blocks 42-44 perform a histogram equalization for pixel clusters with brightness values between zero (i.e., the minimum brightness value) and a predefined brightness threshold THR, and the blocks 46-48 perform a histogram equalization for pixel clusters with brightness values between threshold THR and 256 (i.e., the maximum brightness value). Creating a histogram merely involves counting the number of pixels of imager 20b having the same the brightness values, and tabulating the result. The histogram equalization process involves calculating a new brightness level for each pixel concentration in a given brightness region. As indicated at blocks 42 and 46, the process first involves the creation of a summation array from the histogram values within the respective region -- that is, an array having a position for each brightness value in the respective region, where each position stores the sum of the histogram values for that brightness value and all smaller brightness values in that region. Then as indicated at blocks 43 and 47, the summation values in the array are normalized based on the maximum brightness value in the respective region and the total number of pixels in the image. Finally, as indicated at blocks 44 and 48, pixels of the captured image with brightness levels represented in the summation array are adjusted based on the normalized summation values. Pixels within each region of the brightness continuum retain their order of brightness, but the brightness levels are redistributed within the respective region to achieve the results described above in respect to FIGS. 4A-4B.

In summary, the present invention provides an easily implemented image processing method that facilitates reliable edge detection of objects imaged by a vision-based occupant sensing system. While the invention has been described in reference to the illustrated embodiment, it should be understood that various modifications in addition to those mentioned above will occur to persons skilled in the art. Accordingly, it is intended that the invention not be limited to the disclosed embodiment, but that it have the full scope permitted by the language of the following claims.

## Claims

1. A method of processing a digital image produced by an imaging chip (20b) of a vision-based occupant sensing system (VS), comprising the steps of:
producing histogram data (40) tabulating pixel concentrations over a brightness continuum of said imaging chip (20b);
segmenting said brightness continuum into two or more brightness regions (42/46);
identifying the tabulated pixel concentrations in each brightness region (42/46); and
within each of said brightness regions, adjusting a brightness of the identified pixel concentrations to distribute such identified pixel concentrations within that brightness region (42-44/46-48).

2. The method of claim 1, including the step of:
segmenting said brightness continuum into two or more brightness regions separated by one or more predefined brightness thresholds (42, 46).

3. The method of claim 1, including the steps of:
(a) creating a summation array of the pixel concentrations identified in a given brightness region (42);
(b) normalizing said summation array based on a maximum pixel concentration brightness value in said given brightness region (43);
(c) adjusting the brightness of the identified pixel concentrations of the given brightness region using the normalized summation array (44); and
(d) successively repeating the above steps (a), (b) and (c) for the identified pixel concentrations of brightness regions other than said given brightness region (46, 47, 48).
